# EUROPEAN PATENT APPLICATION

(11) **EP 3 467 978 A1**
(43) Date of publication of application: **10.04.2019**
(21) Application number: 17742845.5
(22) Date of filing: 01.06.2017
(51) Int. Cl.: H02G 3/12, H02G 3/18

(54) **ASSEMBLY FOR SECURING BUILT-IN ELECTRONIC AND ELECTRICAL DEVICES**

(30) Priority: 02.06.2016 ES 201630729
(71) Applicant: Simon, S.A.U., 08013 Barcelona (ES)
(72) Inventor: ARDERIU COSTAS, Jordi, 08013 Barcelona (ES); ACIEN FERNANDEZ, Jonatan, 08013 Barcelona (ES)
(74) Representative: Espiell Volart, Eduardo Maria
(86) International application number: PCT/IB2017/053231
(87) International publication number: WO 2017/208185

(57) **Abstract**

Fastening assembly for electric and/or electronic devices that can be built-in. It is comprised of a frame (2) adapted to fasten an electric and/or electronic device and claws (3) adapted to secure the frame (2) to the wall or box where it is built-in, showing at least two claws (3) of which at least one is flexible and independent from the frame (2) and can be joined to the frame (2) by temporarily deforming the claw (3) generating when joined to the frame (2) at least three unaligned bearing points between the claw (3) and the frame (2). The frame (2) is comprised of at least one hollow (21) and at least two supporting points (20), and the claw (3) two bearing points (30), which in their deformed position can be introduced in the hollow (21) of the frame (2) and when the claw (3) is released, the said bearing points (30) or clipping flanges are coincident with the supporting points or mortises (20) of the frame (2). The claw (3) shows a U-shaped cross section that when applying pressure is reduced and when the pressure is no longer applied the gap increases and the clipping flanges (30) are secured in the mortises (20). The flanges (30) show a recess (31). The claw (3) shows a groove (34).

## Description

### OBJECT OF THE INVENTION

The invention, as it is stated in the title of this specification, refers to a fastening assembly for electric and electronic devices that can be built-in, that provides the function to which it is designed with advantages and characteristics that will be disclosed in detail below, that mean an improvement to the current state of the art.

The object of the present invention concerns a fastening assembly comprised of a frame and claws that are coupled to the frame and allow their fastening to a built-in box designed to house, coupled to the said frame, electric and/or electronic components, with the feature that the said claws are coupled to the frame by simply pressing and clipping two bearing points, thanks to a structural configuration of both elements designed to that effect, avoiding the need to use tools and therefore optimizing, the fastening effectivity and facility. In addition, the claws of the assembly proposed by the invention have a groove or slit to allow the leverage and their retightening.

### FIELD OF APPLICATION OF THE INVENTION

The field of application of this invention is framed in the sector of the industry engaged in the production of mechanisms, devices and fittings of electric and electronic material.

### BACKGROUND OF THE INVENTION

As it is known, the electric or electronic devices that are installed within a box, can be secured by two different methods. A first method is applied when the box in which the device is to be installed has available a series of housings for screws and, by means of which, the device is secured to the box. With the second method, when the box in which the device is to be installed has no housings available for screws or the device has no means available to be secured by means of screws, it is secured by means of claws.

For this second method of fastening by means of claws, systems are also known in which the claws are separate elements from a frame to which are coupled the different electric or electronic components to be installed built within the box, however, the junction between the said claws and the said frame, which uses to be carried out by means of screws, in addition to resulting complex and requiring the use of tools to perform it, does not provide a fully optimum fastening, as it allows the eventual existence of movements, especially susceptible to be increased with the use when connecting or disconnecting the electric or electronic components.

The essential objective of this invention therefore is to develop an improved fastening assembly for this type of devices where the coupling between the frame and the claws means a much simpler and easier operation to be carried out but in addition, it implies optimizing the effectiveness of its task, that means, fastening the electric or electronic device to the built-in box and its further withdrawal.

On the other hand, and as reference to the current state of the art, it shall be stated that at least the applicant is not aware of the existence of any other fastening assembly for electric and electronic devices that can be built-in showing technical, structural and constitutive characteristics similar to those provided by the assembly herein presented and claimed.

### DESCRIPTION OF THE INVENTION

Concretely, what the invention proposes, as it has been stated before, is a fastening assembly comprised of a frame and at least two claws that are preferably coupled to opposite sides of the said frame to provide a fastening means by pressing the internal walls of a built-in box or hollow in the wall designed to house, coupled to the said frame, electric and/or electronic components as such claws remain, when they are coupled to the frame, bent by pressure exerted on them so that their insertion within the box or wall is made easier but prevent their withdrawal as their distal end edges are locked on the said walls of the box.

In an embodiment of the invention, the claws and the frame show a structural configuration designed to be coupled to each other simply by the temporary deformation of the claw.

According to another embodiment of the invention, when the claws have being joined to the frame, the claws show at least two bearing points between each claw and the frame and preferably, they show three nonaligned bearing points between the claw and the frame in order to offer a higher tensile strength. The said bearing points transmit the pressure exerted on the frame to the claws when the user tries to couple the electric and electronic device to the built-in box.

For this and entering in more details, the claws preferably have a U-shaped cross section configuration or similar, that means that their section follows a line that forms, between the ends and its intermediate point, a convex angle having at its edge in contact with the frame clipping flanges designed to fit in respective mortises provided to that effect in the frame.

After temporarily deforming the claw, by applying pressure on the side ends (or U-shaped ends), the gap between these ends is reduced so that the claw angle is closed, a fact that allow to insert the clipping flanges in the said mortises of the frame. When the pressure is no longer exerted on the claw, this later tends to increase the gap between the ends, so that the clipping flanges exert pressure on the mortises and it is assured that the claws are secured in an optimum way on the frame. The clipping flanges of the claws and the related mortises of the frame provide the advantage of avoiding eventual side movements of the claws with respect to the frame.

The claws, once secured on the frame show least three bearing points with respect to the said frame. Two of them are coincident with the clipping flanges and the third is an intermediate point that, preferably, constitutes the rim of the claw in contact with the surface of the frame.

In a preferred embodiment, the claw has three points one of which is unaligned with respect to the other two and so the claw keeps its vertical axis normal to the frame, increasing the tensile strength of the claws-frame assembly, with respect to the box or hollow where it is secured.

When withdrawing the assembly (claws and frame) from the built-in box, the user can newly temporarily deform a claw allowing its decoupling with respect to the frame. Consequently, the assembly (claws-frame) can be withdrawn from the built-in box.

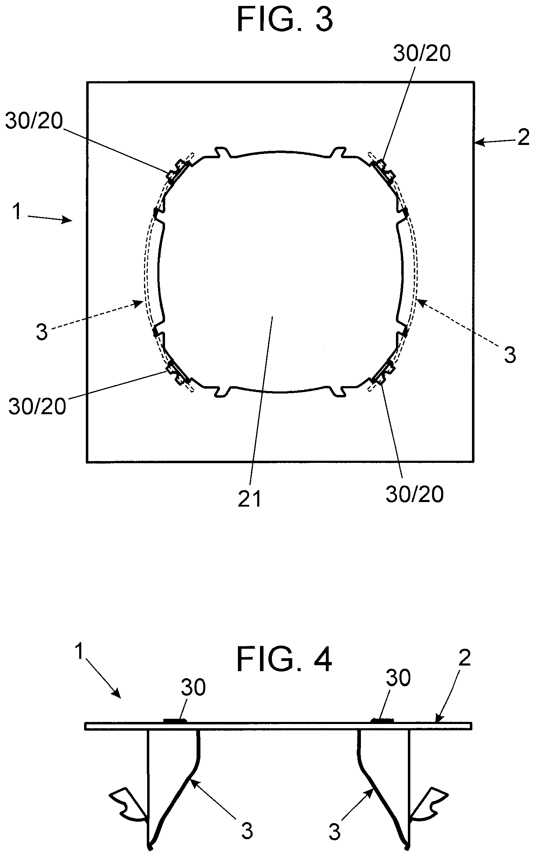

Preferably the claw when it is joined to the frame, and thanks to its U-shaped configuration, only adds to the hollow of the frame the related area of the clipping flanges as it is inserted in the mortises of the frame, so that the rim of the claw is supported on the surface of the frame, as shown in the figure 3.

Further with the features of the fastening assembly of the invention, it is significant to point out that the structural configuration of the elements of which it is comprised is preferably designed to allow retightening the claws after the fastening assembly has been installed in the built-in box. For this purpose, the claws are comprised of a groove or slit in its surface designed to allow the insertion of the tip of a tool, for example a screwdriver, to allow the leverage and apply some additional pressure to secure the locking of the claws on the internal walls of the built-in box, that means, what is known as retightening.

The fastening assembly disclosed for built-in electric and electronic devices possesses an innovating structure with characteristics unknown up to date for the purpose to which it is designed, reasons that jointly with its practical utility, endow it with sufficient ground to obtain the privilege of exclusivity applied for.

### DESCRIPTION OF THE DRAWINGS

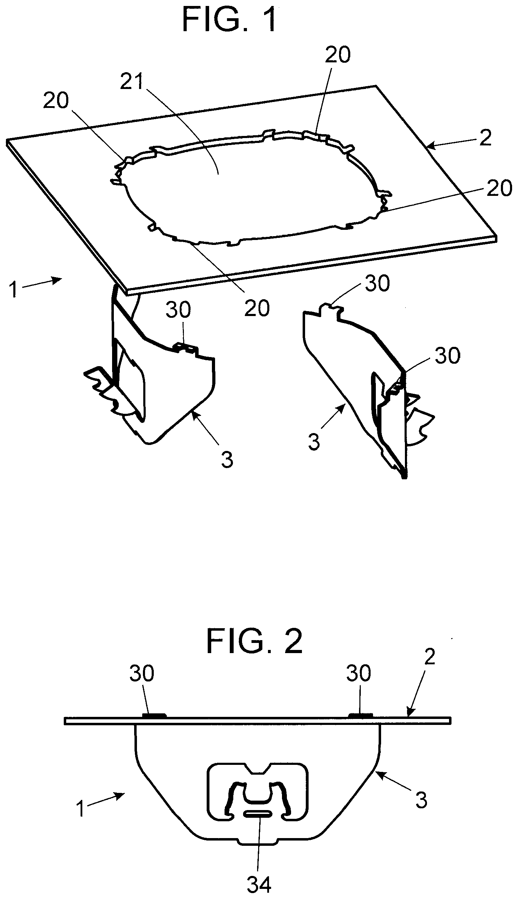

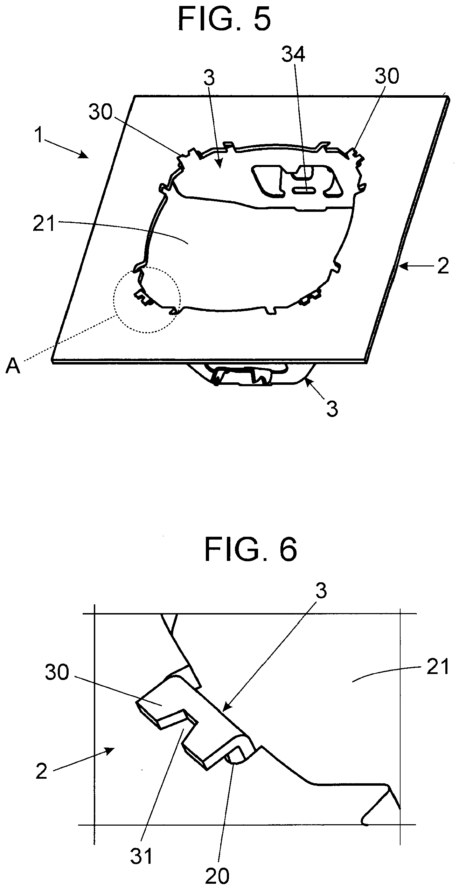

To complement the description that is given and in order to assist to best understand the characteristics of the invention, to this specification is attached as an integral part thereof, a set of drawings in which, for illustrative and non-limitative purpose the following has been represented:
Figure number 1.- It shows a view in perspective and exploded of the fastening assembly for built-in electric and electronic devices, object of the invention, in which the main parts and elements comprised can be seen, as well as its configuration;
Figures number 2, 3 and 4.- They show the respective side elevation, plane and front elevation views of the fastening assembly of the invention, according to the same example shown in the Figure 1, represented in the three cases after the claws are coupled to the frame, their fastening way and their arrangement with respect to the frame can be seen;
Figure number 5.- It shows a view in perspective of the assembly of the invention mounted, showing the pathway access to the surface of the claws to allow retightening them; and
Figure number 6.- It shows an enlarged view of the detail A shown in the Figure 5, in which the configuration and coupling of the clipping flanges of the claws to the frame can be seen.

### PREFERRED EMBODIMENT OF THE INVENTION

At the sight of the said figures, and according to the numbering adopted in them, a non-limitative example of the fastening assembly for electric and electronic devices that can be built-in of the invention can be seen, which is comprised of the parts and elements indicated and disclosed in detail below.

Thus, as it can be seen in the said figures, the assembly (1) involved is comprised of a frame (2), and at least two claws (3). At least one claw (3) is flexible and independent from the frame (2) and it can be joined to the frame (2) by temporary deformation thereof. When the claw (3) is joined to the frame (2) at least two bearing points are generated, and preferably three unaligned bearing points between the claw (3) and the frame (2).

Preferably the frame is comprised of at least one hollow (21) and at least two supporting points (20) and the claw (3) shows at least two bearing points (30) so that the bearing points (30) of the claw (3) in its deformed position can be introduced in the hollow (21) of the frame (2) and when the claw (3) is released from the pressure exerted to be inserted in the frame, the said bearing points (30) are coincident with the supporting points (20).

In a preferred embodiment, the supporting points (20) of the frame (2) are mortises, the bearing points (30) of the claw (3) are clipping flanges and the claw (3) shown a U-shaped cross section so that by applying pressure on the external surface of the ends of the U inwards the gap between the said ends is reduced and the clipping flanges (30) can be introduced in the mortises (20) and when the pressure is no longer applied the gap increases and the clipping flanges (30) remain fastened in the mortises (20).

Preferably, the clipping flanges (30) of the claw (3) show a recess (31) adapted to the insertion of a tool that after applying pressure temporarily deforms the claw (3) shortening the gap between its ends and thus allows to withdraw the clipping flange (30) from the mortise (20). Consequently, the assembly (frame plus claws) can be easily withdrawn from the wall or the built-in box (not shown).

Preferably the claw (3) once joined to the frame (2), and thanks to its U-shaped configuration, only adds to the hollow (21) of the frame (2) the related area of the clipping flanges (30) as it is fitted in the mortises (20) of the frame, so that the rim of the claw is supported on the surface of the frame, as shown in the Figure 3.

Preferably, the claws (3) also have a groove or slit (34), adapted to the insertion of a tool and applying pressure on the claws and carrying out, if required, their retightening against the walls of the built-in box.

Sufficiently disclosed the nature of the present invention, as well as the way of implementing it, it is not deemed necessary to extend any longer its description in order that a person skilled in the art understands its extent and the advantages arising from it, and it is stated that, within its essentiality, it can be implemented with other embodiments different in detail of that mentioned for example purpose and to which shall also extend the protection sought, provided that its fundamental principle is not altered, changed or modified.

## Claims

1. Fastening assembly for electric and/or electronic devices that can be built-in comprised of
• a frame (2) adapted to fasten an electric and/or electronic device, and
• claws (3) adapted to secure the frame (2) to the wall or box where it is built-in.
**characterized in that** it is comprised of at least two claws (3) of which at least one of the claws (3) is flexible and independent from the frame (2) and can be joined to the frame (2) by means of the temporary deformation of the flexible claw (3) generating, when it is joined to the frame (2), at least three unaligned bearing points between the flexible claw (3) and the frame (2).

2. Fastening assembly for electric and/or electronic devices that can be built-in, according to the claim 1, **characterized in that**
• the frame (2) is comprised of at least one hollow (21) and at least two supporting points (20), and
• two bearing points (30) of the flexible claw (3), in the deformed position of the flexible claw (3), can be introduced in the hollow (21) of the frame (2) and when the flexible claw (3) is released from the pressure exerted for its insertion in the frame, both bearing points (30) are coincident with the supporting points (20) of the frame (2).

3. Fastening assembly for electric and/or electronic devices that can be built-in, according to the claim 2, **characterized in that** the supporting points (20) of the frame (2) are mortises.

4. Fastening assembly for electric and/or electronic devices that can be built-in, according to the claim 2 or 3, **characterized in that** two of the bearing points (30) of the flexible claw (3) are clipping flanges.

5. Fastening assembly for electric and/or electronic devices that can be built-in, according to the claim 4, **characterized in that** the flexible claw (3) shows a U-shaped cross section, so that when applying pressure on the external surface of the ends of the U inwards the gap between the said ends is shortened and the clipping flanges (30) can be introduced in the mortises (20) and when the pressure is no longer applied the gap increases and the clipping flanges (30) remain secured in the mortises (20).

6. Fastening assembly for electric and/or electronic devices that can be built-in, according to the claim 5, **characterized in that** the clipping flanges (30) of the flexible claw (3) show a recess (31) adapted to inserting a tool that after applying pressure and temporarily deforming the flexible claw (3), allows withdrawing the clipping flange (30) from the mortise (20).

7. Fastening assembly for electric and/or electronic devices that can be built-in, according to the claim 5 or 6, **characterized in that** the flexible claw (3) when joined to the frame (2) and thanks to its U-shaped configuration only adds to the hollow (21) of the frame (2) the related area of the clipping flanges (30) as it is inserted in the mortises (20) of the frame, so that the rim of the claw is supported on the surface of the frame (2).

8. Fastening assembly for electric and/or electronic devices that can be built-in, according to any of the preceding claims, **characterized in that** the flexible claw (3) shows a groove or slit (34) adapted to inserting a tool for the leverage and retightening the flexible claw (3).
